# EUROPEAN PATENT SPECIFICATION

(11) **EP 2 749 013 B1**
(45) Date of publication and mention of the grant of the patent: **08.01.2020**
(21) Application number: 11764612.5
(22) Date of filing: 24.08.2011
(51) Int. Cl.: H04M 1/725, G06F 3/01

(54) **SHORT-RANGE RADIO FREQUENCY WIRELESS COMMUNICATION DATA TRANSFER METHODS AND RELATED DEVICES**
DATENÜBERTRAGUNGSVERFAHREN MITHILFE DRAHTLOSER KOMMUNIKATION ÜBER KURZBEREICHSFUNKFREQUENZEN UND ENTSPRECHENDE VORRICHTUNGEN
PROCÉDÉS DE TRANSFERT DE DONNÉES DANS DES COMMUNICATIONS SANS FIL RADIOFRÉQUENCE À COURTE DISTANCE, ET DISPOSITIFS ASSOCIÉS

(43) Date of publication of application: 02.07.2014
(73) Proprietor: Sony Corporation, Tokyo 108-0075 (JP)
(72) Inventor: WIKANDER, Anders, S-238 31 Oxie (SE)
(74) Representative: Aera A/S
(86) International application number: PCT/IB2011/001935
(87) International publication number: WO 2013/027077

(56) References cited:
- WO-A1-2008/007175
- US-A1- 2006 256 074
- US-A1- 2009 017 799
- US-A1- 2011 070 837
- US-A1- 2011 163 944

## Description

### FIELD

The present inventive concept generally relates to the field of communications and, more particularly, to short-range Radio Frequency (RF) wireless communication data transfer methods and related devices.

### BACKGROUND

Short-range RF wireless communications may include Near Field Communications (NFC). NFC is a wireless communication technology that enables short-range communications between closely-positioned (e.g., less than twenty (20.0) centimeters (cm)) wireless devices. NFC may operate at a frequency of 13.56 Megahertz (MHz), which, in some countries, falls in an unlicensed ISM (industrial, scientific, medical) frequency range. The 13.56MHz operating frequency may also be used for Radio Frequency Identification (RFID) applications. Thus, an NFC device can communicate with other NFC devices in a peer-to-peer communication mode, as well as with RFID devices in a read/write mode. Like RFID, NFC uses magnetic field induction for communication. In magnetic field induction, two communicating devices each include loop antennas. When placed in close proximity (e.g., less than twenty (20.0) cm), an electrical signal on one of the loop antennas can induce an electrical signal in the other of the loop antennas, thus providing a communication path between the devices.

NFC tags may be used to provide information (e.g., retail payment information) between a mobile phone and the NFC tags. For example, a user of the mobile phone may initiate or finalize a communication session with an NFC tag by bringing the mobile phone into close proximity with the NFC tag. One example of such a communication may be communicating with an NFC tag near a painting to receive more information at the mobile phone about the artist of the painting. Another example of the communication session may be communicating with an NFC tag near a cash register to pay for merchandise using the mobile phone.

Communication sessions between mobile phones and NFC tags may be integrated with additional interaction with mobile phone users. For example, a user of a mobile phone may initiate a communication session with an NFC tag and then provide additional input (e.g., to sort through menu options or to answer requests) using the keypad of the mobile phone.

US 2006/256074 discloses information exchange systems and methods ("IES") that allow users of portable devices to initiate exchanges of information with a simple gesture. Detection of this gesture causes the host device to perform a number of actions including one or more of selecting data for an exchange transaction, identifying one or more destination devices to receive the selected data, transferring the selected data to the destination devices, and receiving complementary or corresponding data from the destination devices. The IES thus avoids the requirement for users to perform time consuming and error prone interactions involving complex operations with a device interface in order to initiate data exchanges.

WO 2008/007175 discloses a method of transferring data from a hand held electronic device to a target electronic device and includes establishing a wireless interface between the hand held electronic device and the target electronic device. A transfer motion that includes rotation of the hand held electronic device is detected. Upon detection of the transfer motion, the data is transmitted from the hand held electronic device to the target electronic device over the wireless interface. The wireless interface may be initiated and configured using a localized communication link.

US 2011/163944 discloses that a user can make an intuitive, physical gesture with a first device, which can be detected by one or more onboard motion sensors. The detected motion triggers an animation having a "physics metaphor," where the object appears to react to forces in a real world, physical environment. The first device detects the presence of a second device and a communication link is established allowing a transfer of data represented by the object to the second device. During the transfer, the first device can animate the object to simulate the object leaving the first device and the second device can animate the object to simulate the object entering the second device. In some implementations, in response to an intuitive, gesture made on a touch sensitive surface of a first device or by physically moving the device, an object can be transferred or broadcast to other devices or a network resource based on a direction, velocity or speed of the gesture.

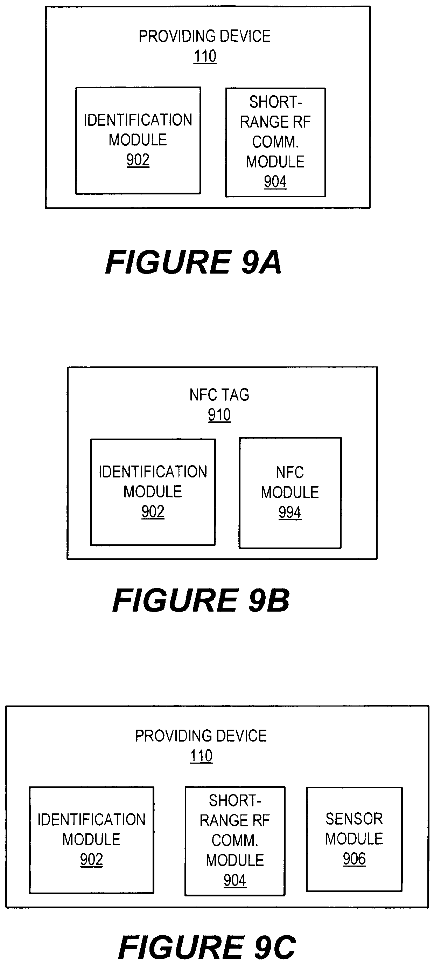

US 2011/070837 A1 relates to establishing a communications system with two devices. Each device can determine the presence of the other device by sensing the presence of a magnet of the other device. These detections of a magnet activate an NFC circuit in each device, and the devices can then read data from each other using NFC. The NFC circuits can also be activated using tapping detected by an accelerometer. When the device is tapped against another object, for example, an NFC tag, a profile is generated as a matter of certain accelerometer parameters being met or exceeded. If the profile corresponds to a known tap profile, it will wake the NFC circuit and initiate communication. US 2011/070837 A1 generally discusses two communication modes: (1) Passive communication mode where the target device operates as a passive device. When the NFC circuits have been activated, the active initiator device reads data from the passive target device. The data is used by the active device without further interaction with the passive device. The embodiments described in relation to Figures 9-19 relates to such embodiments. (2) Active communication mode where both initiator and target devices are active. When the NFC circuits have been activated, the devices read identification numbers and security keys from each other, which data is then used for establishing a higher level communications protocol between the two devices.

### SUMMARY

Some embodiments of the present inventive concept include a data transfer method as defined in independent claim 1 and a short-range radio frequency wireless communication providing device as defined in independent claim 7.

The invention is defined in the independent claims and various embodiments are defined in the dependent claims.

The embodiments described below are examples for better understanding the invention. Embodiments which do not fall within the scope of the claims do not describe part of the present invention.

### BRIEF DESCRIPTION OF THE DRAWINGS

Figure 1 illustrates a requesting device and a providing device that communicate with each other through a short-range Radio Frequency (RF) wireless communication link, according to some embodiments of the present inventive concept.
Figure 2 is a flowchart illustrating a method of transferring data from the providing device to the requesting device in response to device gesture data, according to some embodiments of the present inventive concept.
Figure 3 is a flowchart illustrating a data transfer method that includes selecting data to transfer and preventing the transfer of non-selected data, according to some embodiments of the present inventive concept.
Figure 4 is a flowchart illustrating a method of transferring data from a Near Field Communication (NFC) tag to the requesting device in response to device gesture data, according to some embodiments of the present inventive concept.
Figure 5 is a flowchart illustrating a data transfer method in which the requesting device transmits the device gesture data to the providing device, according to some embodiments of the present inventive concept.
Figure 6 is a flowchart illustrating a data transfer method in which the providing device identifies the device gesture, according to some embodiments of the present inventive concept.
Figure 7 is a block diagram illustrating the portable electronic device, according to some embodiments of the present inventive concept.
Figure 8 is a block diagram illustrating an NFC module, according to some embodiments of the present inventive concept.
Figures 9A-9C are block diagrams illustrating the providing device, according to some embodiments of the present inventive concept.
Figures 10A-10C illustrate device gestures performed by the portable electronic device, according to some embodiments of the present inventive concept.

### DETAILED DESCRIPTION OF EMBODIMENTS

The present inventive concept now will be described more fully with reference to the accompanying drawings, in which embodiments of the inventive concept are shown. However, the present application should not be construed as limited to the embodiments set forth herein. Rather, these embodiments are provided so that this disclosure will be thorough and complete, and to fully convey the scope of the embodiments to those skilled in the art. Like reference numbers refer to like elements throughout.

The terminology used herein is for the purpose of describing particular embodiments only and is not intended to be limiting of the embodiments. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, steps, operations, elements, and/or components, but do not preclude the presence or addition of one or more other features, steps, operations, elements, components, and/or groups thereof.

It will be understood that when an element is referred to as being "coupled," "connected," or "responsive" to another element, it can be directly coupled, connected, or responsive to the other element, or intervening elements may also be present. In contrast, when an element is referred to as being "directly coupled," "directly connected," or "directly responsive" to another element, there are no intervening elements present. As used herein the term "and/or" includes any and all combinations of one or more of the associated listed items.

Spatially relative terms, such as "above", "below", "upper", "lower" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly. Well-known functions or constructions may not be described in detail for brevity and/or clarity.

It will be understood that, although the terms first, second, etc. may be used herein to describe various elements, these elements should not be limited by these terms. These terms are only used to distinguish one element from another. Thus, a first element could be termed a second element without departing from the teachings of the present embodiments.

Unless otherwise defined, all terms (including technical and scientific terms) used herein have the same meaning as commonly understood by one of ordinary skill in the art to which these embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It is to be understood that the functions/acts indicated in the illustrated blocks may occur out of the order noted in the operational illustrations. For example, two blocks shown in succession may in fact be executed substantially concurrently or the blocks may sometimes be executed in the reverse order, depending upon the functionality/acts involved.

Although Near Field Communication (NFC) links have been used to facilitate payments for merchandise (as well as to provide other information) for users of devices communicating through the NFC links, communication sessions using the NFC links have been somewhat basic (e.g., limited to initiating or finalizing payments for merchandise). For example, although NFC links have facilitated payment processes, the payment processes have been integrated with additional user inputs (e.g., selecting menu options using a keypad). Accordingly, the payment processes have involved multiple steps and additional user inputs.

However, some embodiments of the data transfer methods and related devices described herein may provide options to a user of a portable electronic device in a relatively easily-accessible manner. For example, some embodiments described herein may combine short-range Radio Frequency (RF) wireless communications (e.g., NFC communications) with multiple device gestures to provide multiple options to the user of the portable electronic device. In particular, in one example, an NFC tag may transfer specific data (among a plurality of available transferrable data) to the portable electronic device in response a particular device gesture (among a plurality of possible device gestures) performed by the portable electronic device. Also, some embodiments described herein may provide relatively fast (e.g., instant) data transfers to the portable electronic device without requiring additional user inputs through manipulation of a user interface (e.g., keypad/keyboard/touch interface) beyond the particular device gesture performed with the portable electronic device. For example, the specific data may be transferred from the NFC tag to the portable electronic device in response to occurrence of the particular device gesture without requiring the user to look at a display screen of the portable electronic device and provide further input to the portable electronic device through a user interface. Accordingly, the particular device gesture performed by the portable electronic device may determine what specific data should be transferred by the NFC tag to the portable electronic device, and can initiate that specific data transfer. Alternatively, the particular device gesture performed by the portable electronic device may determine what specific data should be transferred from the portable electronic device to another device (e.g., another portable electronic device or the NFC tag).

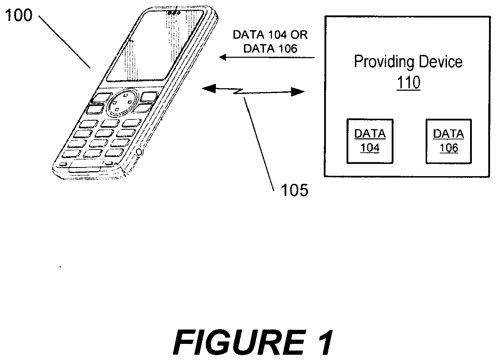

Referring to Figure 1, an illustration is provided of a portable electronic device (e.g., a requesting device) 100 and a proximately-located electronic device (e.g., a providing device) 110 that may communicate with each other through a short-range RF wireless communication link 105, according to some embodiments of the present inventive concept. The providing device 110 may transfer data to the requesting device 100 through the short-range RF wireless communication link 105 or through another link/channel (e.g., the Internet, a Wireless Local Area Network (WLAN), Bluetooth, etc.). For example, the providing device 110 may be configured to select among a plurality of different data (e.g., audio, video, and/or information content/files) for transfer to the requesting device 100. As an example, the providing device 110 may be configured to transfer data 104 and data 106 to the requesting device 100. According to some embodiments, the providing device 110 may be configured to selectively transfer a particular one of the data 104 and the data 106 in response to a particular device gesture (e.g., a motion or orientation) performed by the requesting device 100 by operation of a user. Alternatively, the portable electronic device 100 may be a providing device that is configured to selectively transfer a particular one of the data 104 and the data 106 to another device in response to a particular device gesture. The particular one of the data 104 and the data 106 may be transferred through the short-range RF wireless communication link 105 or through another link/channel. For example, the providing device 110 may receive device gesture data through the short-range RF wireless communication link 105, and may transfer the data 104 to the requesting device 100 through the Internet in response to the device gesture data.

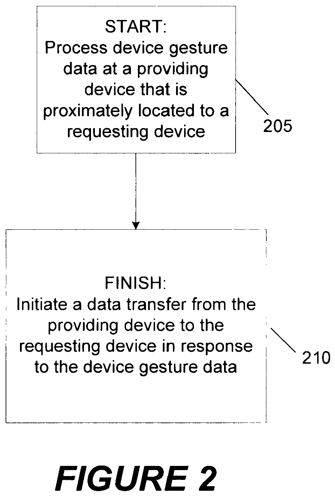

Referring now to Figure 2, a flowchart is provided illustrating a method of transferring data (e.g., the data 104, 106) from the providing device 110 to the requesting device 100 in response to device gesture data, according to some embodiments of the present inventive concept. The device gesture data may identify a gesture made by movement and/or orientation of one of the providing device 110 and the requesting device 100 while proximately located to the other one of the providing device 110 and the requesting device 100. For example, the device gesture data may indicate a shake or a rotation (e.g., a spin or a flip) of the requesting device 100. In another example, the device gesture data may indicate a tap (or multiple taps) on the requesting device 100 (e.g., taps with a stylus or a user's finger), or a tap (or multiple taps) by the requesting device 100 on the providing device 110. In a further example, the device gesture data may indicate an orientation of the requesting device 100 (e.g., an orientation with respect to the ground or with respect to the providing device 110). For example, the device gesture data may indicate that a portion (e.g., a display) of the requesting device 100 faces (or doesn't face, or is oriented at a given angle with respect to) the providing device 110. In an additional example, the device gesture data may indicate that the requesting device 100 is held (e.g., held substantially motionless) near or on the providing device 110 for a given amount of time.

Referring still to Figure 2, the data transfer method may include processing the device gesture data at the providing device 110 (Block 205). For example, processing the device gesture data at the providing device 110 may include determining what particular device gesture (e.g., shake, spin, flip, tilt, tap, hold/lack-of-motion, angle-of-facing, direction-of-facing, etc.) is indicated by the device gesture data. Processing the device gesture data at the providing device 110 may additionally, or alternatively, include selecting specific data to transfer to the requesting device 100 in response to the device gesture data (e.g., in response to the particular device gesture).

As further illustrated in Block 205, the providing device 110 and the requesting device 100 may be proximately located to each other. For example, the providing device 110 and the requesting device 100 may be within about four (4.0) centimeters (cm) of each other. In another example the providing device 110 and the requesting device 100 may be within about twenty (20.0) cm of each other.

As illustrated in Block 210 of Figure 2, according to some embodiments, the data transfer method may further include initiating a data transfer from the providing device 110 to the requesting device 100 (e.g., through the short-range RF communication link 105 or through another link/channel) in response to the device gesture data. The device gesture data may indicate the movement or orientation of one of the providing device 110 and the requesting device 100, and either one (or both) of the providing device 110 and the requesting device 100 may identify/detect/sense the movement or orientation. For example, the requesting device 100 may identify/detect/sense the movement or orientation of the requesting device 100, and the providing device 110 may subsequently process device gesture data that indicates the movement or orientation of the requesting device 100.

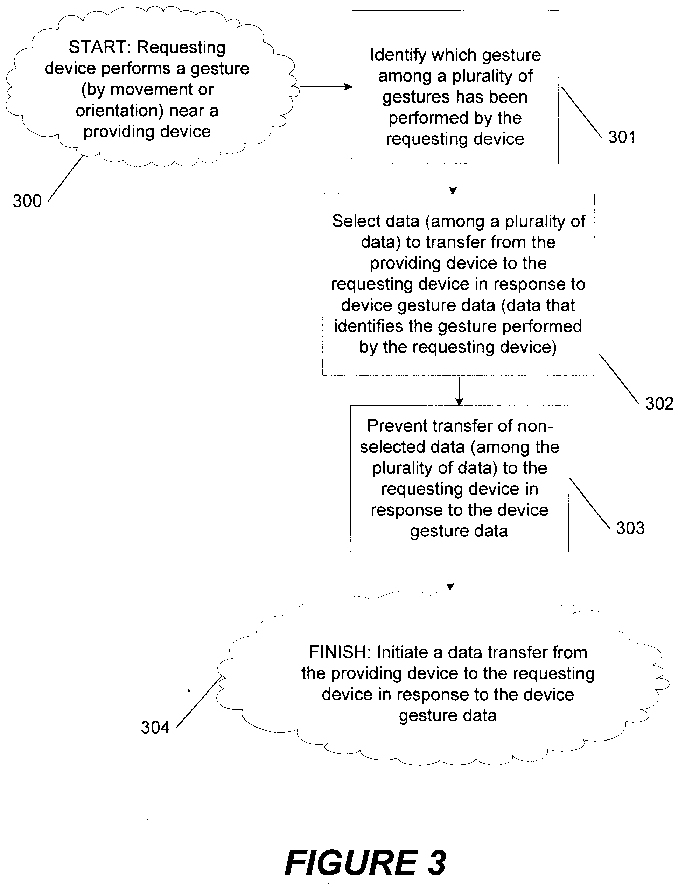

Referring now to Figure 3, a flowchart is provided illustrating a data transfer method that includes selecting data to transfer and preventing the transfer of non-selected data, according to some embodiments of the present inventive concept. The data transfer method includes the requesting device 100 performing a device gesture near (e.g., proximately to) the providing device 110 (Block 300). The data transfer method may also include identifying which device gesture among the plurality of device gestures (e.g., shake, spin, flip, tilt, tap, hold, angle-of-facing, direction-of-facing, etc.) has been performed by the requesting device 100 (Block 301).

Referring again to Figure 1, the providing device 110 may be configured to transfer a plurality of data (e.g., data 104 and data 106 and/or additional data). Accordingly, the data transfer method illustrated in Figure 3 may further include selecting one of the data 104 and the data 106 to transfer from the providing device 110 to the requesting device 100 in response to the device gesture data, which identifies the device gesture performed by the requesting device 100 (Block 302). For example, in response to transfer of the data 106 being triggered by spinning the requesting device 100, the data 106 will be selected for transfer in response to the device gesture data identifying the device gesture as a spin. Although Figures 3-6 indicate that the requesting device 100 performs the device gesture, it will be understood that the device gesture may be performed by the providing device 110 in some embodiments.

As further illustrated in Figure 3, the data transfer method may also include preventing the transfer of non-selected data among the plurality of data to the requesting device 100 in response to the device gesture data (Block 303). Moreover, the data transfer method may further include initiating a data transfer from the providing device 110 to the requesting device 100 (e.g., through the short-range RF communication link 105 or through another link/channel) in response to the device gesture data (Block 304). For example, the data transfer method may include transferring the data 104 while preventing the transfer of the data 106 in response to the device gesture data. In particular, transfer of the data 104 may be triggered by one of the device gestures (e.g., a shake), whereas transfer of the data 106 may be triggered by a different one of the device gestures (e.g., a tap). Accordingly, the data transfer method may include transferring the data 104 while preventing the transfer of the data 106 in response to the device gesture data indicating a shake.

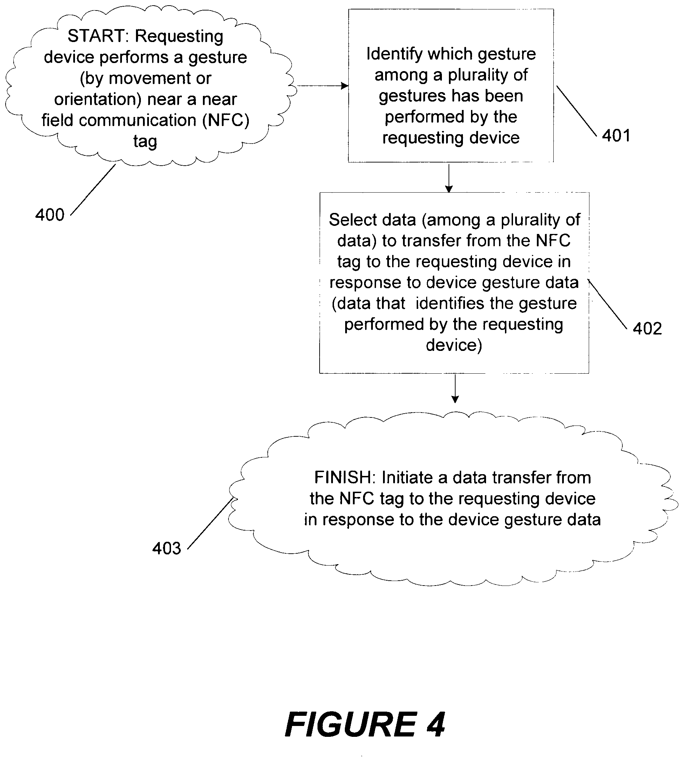

Referring now to Figure 4, a flowchart is provided illustrating a method of transferring data from an NFC tag to the requesting device 100 in response to the device gesture data, according to some embodiments of the present inventive concept. For example, referring again to Figure 1, the providing device 110 may be an NFC tag. Also, the short-range RF wireless communication link 105 may be an NFC link. As such, according to some embodiments, the data transfer method includes the requesting device 100 performing a device gesture near the NFC tag 110 (Block 400). The data transfer method may also include identifying which device gesture among the plurality of device gestures has been performed by the requesting device 100 (Block 401). The data transfer method may further include selecting particular data among the plurality of data to transfer from the NFC tag 110 to the requesting device 100 in response to the device gesture data, which identifies the device gesture performed by the requesting device 100 (Block 402). Moreover, the data transfer method may further include initiating a data transfer from the NFC tag 110 to the requesting device 100 (e.g., through the NFC link 105 or through another link/channel) in response to the device gesture data (Block 403).

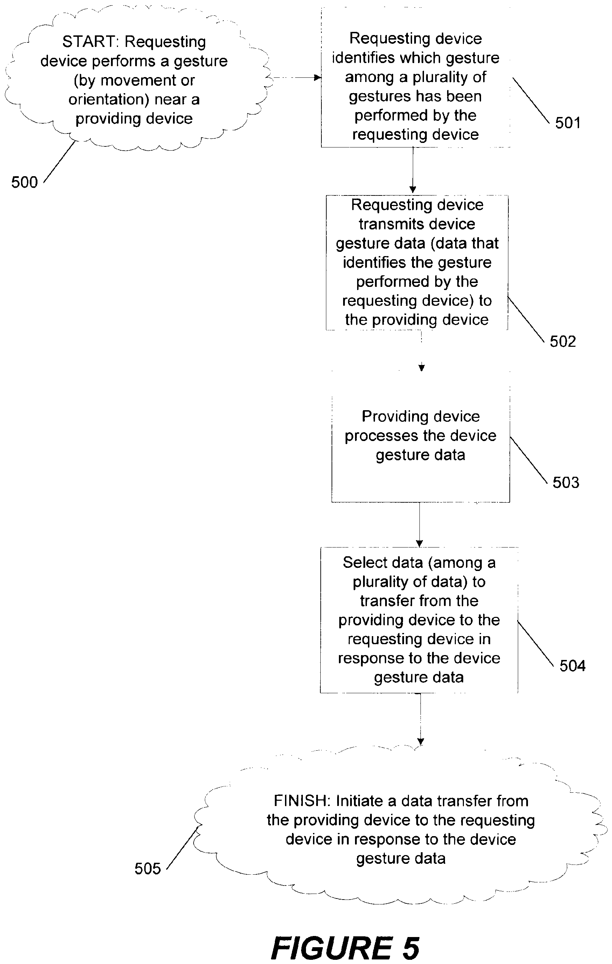

Referring now to Figure 5, a flowchart is provided illustrating a data transfer method in which the requesting device 100 transmits the device gesture data to the providing device 110, according to some embodiments of the present inventive concept. The data transfer method may include the requesting device 100 performing a device gesture near the providing device 110 (Block 500). The data transfer method may also include the requesting device 100 identifying which gesture among a plurality of gestures has been performed by the requesting device 100 (Block 501). For example, the requesting device 100 may be configured to identify the device gesture as a spin, a hold, or a tap, and the requesting device 100 may generate device gesture data that identifies the device gesture as the particular one of the spin, the hold, or the tap. The requesting device 100 may then transmit the device gesture data to the providing device 110 (Block 502).

After the providing device 110 receives the device gesture data from the requesting device 100, the providing device 110 may process the device gesture data (Block 503). For example, the providing device 110 may process the device gesture data to determine that the device gesture has been identified as a spin. In response to the device gesture data (e.g., in response to the processed device gesture data), particular data among a plurality of data may be selected for transfer from the providing device 110 to the requesting device 100 (Block 504). For example, in response to transfer of the data 104 illustrated in Figure 1 being triggered by a spin of the requesting device 100, the data 104 will be selected for transfer from the providing device 110 to the requesting device 100 in response to the device gesture data identifying a spin. As further illustrated in Figure 5, the data transfer method may also include initiating a data transfer from the providing device 110 to the requesting device 100 (e.g., through the short-range RF communication link 105 or through another link/channel) in response to the device gesture data (Block 505).

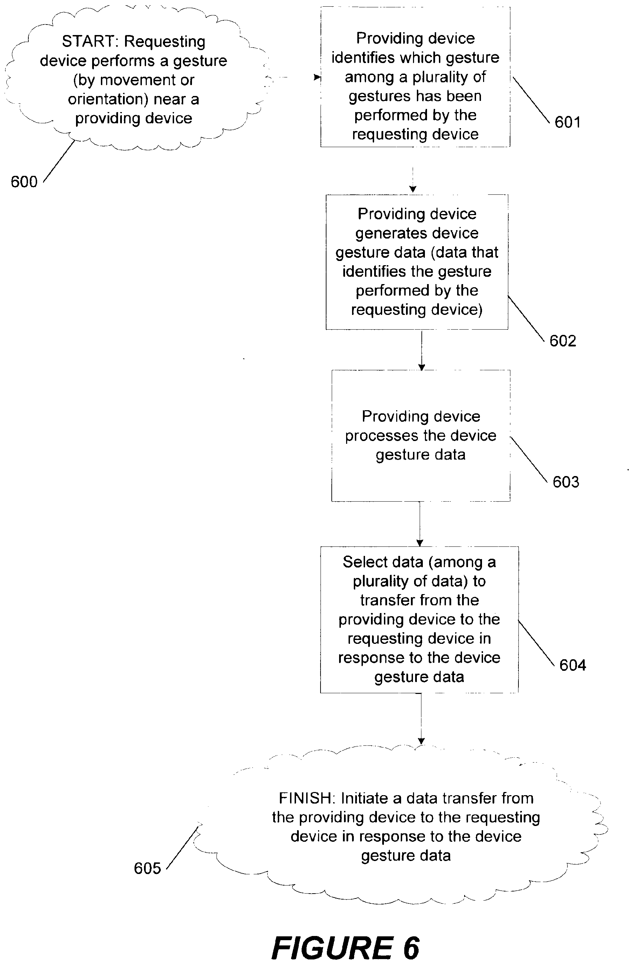

Referring now to Figure 6, a flowchart is provided illustrating a data transfer method in which the providing device 110 identifies the device gesture, according to some embodiments of the present inventive concept. The data transfer method may include the requesting device 100 performing a device gesture near the providing device 110 (Block 600). The data transfer method may also include the providing device 110 identifying which gesture among a plurality of gestures has been performed by the requesting device 100 (Block 601). For example, the providing device 110 may be configured to identify the device gesture as a spin, a hold, or a tap, and the providing device 110 may generate device gesture data that identifies the device gesture as the particular one of the spin, the hold, or the tap (Block 602). In particular, the providing device 110 may include a sensor that identifies movement and/or orientation of the requesting device 100 while proximately located to the providing device 110.

After the providing device 110 generates the device gesture data, the providing device 110 may process the device gesture data (Block 603). For example, processing the device gesture data may include determining that the device gesture has been identified as a spin (for example), and/or may include forwarding the device gesture data to a processor/controller (e.g., a controller within the providing device 110).

In response to the device gesture data, particular data among a plurality of data may be selected for transfer from the providing device 110 to the requesting device 100 (Block 604). For example, a particular one of the data 104 and the data 106 may be selected for transfer in response to the device gesture data. The data transfer method may also include initiating a data transfer from the providing device 110 to the requesting device 100 (e.g., through the short-range RF communication link 105 or through another link/channel) in response to the device gesture data (Block 605).

According to some embodiments, the requesting device 100 may transmit identification information to the providing device 110. The identification information may include, for example, information identifying the requesting device 100 (e.g., hardware information, software information, model number, etc.) and/or identifying the user of the requesting device. The identification information may include authentication information, such as an identification number, an encryption key, a username, and/or a password. Different device gestures may trigger the transmission of different identification information. For example, spinning the requesting device 100 may result in the transmission of a different identification number/key than tilting the requesting device 100.

Referring again to Figure 5, transmitting the device gesture data from the requesting device 100 to the providing device 110 may include transmitting identification information (*See* Block 502). Alternatively, referring again to Figure 6, in some embodiments, the providing device 110 may generate the device gesture data (Block 602), and the requesting device 100 may separately transmit the identification information to the providing device 110. For example, the providing device 110 may generate the device gesture data in response to receiving the identification information from the requesting device 100.

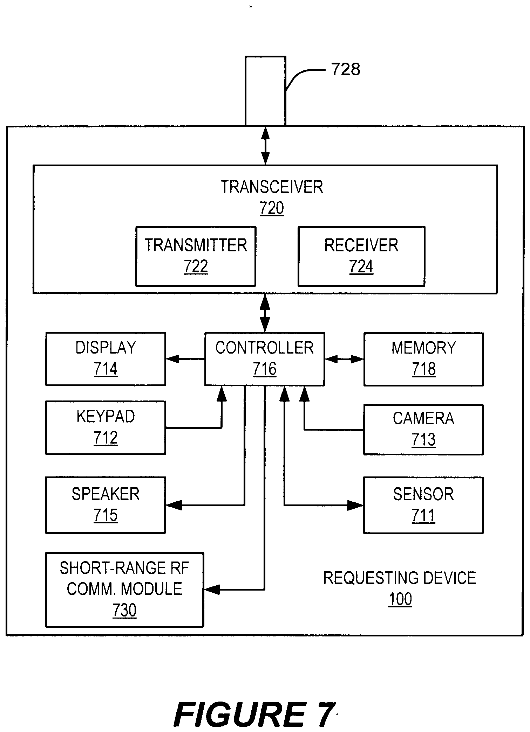

Referring now to Figure 7, a block diagram is provided illustrating the portable electronic device (e.g., a requesting device) 100, according to some embodiments of the present inventive concept. The requesting device 100 may be any of a variety of portable electronic devices. For example, the requesting device 100 may be a mobile terminal (e.g., a mobile telephone), a portable audio player, a portable video player, a camera, an electronic reading device, or a portable computer (e.g., a tablet computer, a netbook computer, or a laptop computer). Moreover, it will be understood that the portable electronic device 100 illustrated in Figure 7 may be a providing device in some embodiments.

As illustrated in Figure 7, the portable electronic device (e.g., a requesting device) 100 may include a keypad 712, a display 714, a transceiver 720, a memory 718, a sensor 711, a speaker 715, and a camera 713 that communicate with a controller 716. According to some embodiments, the camera 713 may be configured as a sensor for detecting device gestures performed on/with the requesting device 100 by a user. For example, the camera 713 may determine a direction (or an angle) that the requesting device 100 is facing/oriented (e.g., with respect to the providing device 110 or another reference point).

The controller 716 may include any low-power microprocessor and/or microcontroller used for portable electronic device applications. The controller 716 can include a signal processor. Additionally, or alternatively, a signal processor can be provided as a separate component of the requesting device 100.

The transceiver 720 may include a transmitter circuit 722 and a receiver circuit 724, which may cooperate to transmit and receive RF signals via an antenna 728. Although Figure 7 illustrates that a portion of the antenna 728 extends beyond the housing of the requesting device 100, in some embodiments, the antenna 728 may not be visible to a user of the requesting device 100 and/or may not protrude from the housing of the requesting device 100. According to some embodiments, the transceiver 720 of the requesting device 100 may be configured to operate in any of the following bands: Advanced Mobile Phone Service (AMPS), ANSI-136, Global System for Mobile Communications (GSM), General Packet Radio Service (GPRS), enhanced data rates for GSM evolution (EDGE), Digital Communications Services (DCS), Personal Digital Cellular (PDC), Personal Communications Services (PCS), Code Division Multiple Access (CDMA), wideband-CDMA, CDMA2000, and/or Universal Mobile Telecommunications System (UMTS) frequency bands. Other bands can also be used in embodiments according to the inventive concept. Also, some embodiments may be compatible with Long Term Evolution (LTE) and/or High Speed Packet Access (HSPA) standards. Additionally, or alternatively, in embodiments, the requesting device 100 may be configured to communicate using Global Positioning System (GPS) and/or Wireless Local Area Network (WLAN) frequency bands.

The memory 718 may be a general purpose memory that is used to store both program instructions for the controller 716, as well as data, such as audio data, video data, configuration data, and/or other data that may be accessed and/or used by the controller 716. The memory 718 may include a nonvolatile read/write memory, a read-only memory, and/or a volatile read/write memory. In particular, the memory 718 may include a read-only memory in which basic operating system instructions are stored, a non-volatile read/write memory in which re-usable data, such as configuration information, directory information, and other information may be stored, as well as a volatile read/write memory, in which short-term instructions and/or temporary data may be stored. In some embodiments, the memory 718 may include a removable nonvolatile memory card.

The requesting device 100 further includes a short-range RF communication module 730 that may be configured to operate in a peer-to-peer mode and/or in a read/write mode. Other modes of operation, such as card emulation mode, may be possible. The short-range RF communication module 730 is operatively coupled to the controller 716 and can operate under the control of the controller 716.

Still referring to Figure 7, the sensor 711 may include one or more sensors that are configured to identify a device gesture performed by the requesting device 100. For example, the sensor 711 may include at least one of a motion sensor, a rotation sensor, a tap sensor, and a proximity sensor. In some embodiments, the motion sensor may be configured to identify shaking of the requesting device 100. The motion sensor may additionally, or alternatively, be configured to identify when the requesting device is held substantially still. In some embodiments, the rotation sensor may be configured to detect rotation (e.g., spinning or tilting) in one or more directions.

In some embodiments, the tap sensor and/or the proximity sensor may be configured to identify contact between the requesting device 100 and the providing device 110. According to some embodiments, the tap sensor may include a microphone that is configured to detect tapping/knocking on the requesting device 100 (e.g., to detect the sound of tapping/knocking on the requesting device 100 with a user's finger or with the providing device 110). Moreover, in some embodiments, the tap sensor may include a touch sensor that detects a touch (e.g., by a user's finger) on a portion (e.g., a touch screen of the display 714) of the requesting device 100.

Accordingly, referring still to Figure 7, the requesting device 100 may be a portable electronic device 100 that includes a short-range RF wireless communication module 730 that is configured to receive at least one of the data 104 and the data 106 (illustrated in Figure 1) from the proximately-located providing device 110 (e.g., through the short-range RF wireless communication link 105 or through another link/channel). The portable electronic device 100 may further include a sensor (e.g., the sensor 711 and/or the camera 713) that is configured to identify occurrence of one of a plurality of device gestures that are made by movement and/or orientation of one of the providing device 110 and the portable electronic device 100 while proximately located to the other one of the providing device 110 and the portable electronic device 100. Moreover, the short-range RF wireless communication module 730 may be further configured to receive at least one of the data 104 and the data 106 in response to the portable electronic device 100 or the providing device 110 identifying a particular one of the plurality of device gestures.

According to some embodiments, the portable electronic device 100 and the providing device 110 may be different types of devices. For example, the portable electronic device 100 may be a battery-powered device, and the providing device 110 may not be battery-powered, but rather may receive power from an external source (e.g., from signals transmitted by the portable electronic device 100). Additionally, or alternatively, the portable electronic device 100 may have a display (e.g., the display 714) and/or a keypad (e.g., the keypad 712), whereas the providing device 110 may not have a display and/or a keypad. Moreover, in some embodiments, the providing device 110 may be an NFC tag that is configured to provide data/content (e.g., the data 104 and/or the data 106 illustrated in Figure 1) to the portable electronic device 100, but that may not be configured to execute the data/content. For example, the providing device 110 may not be configured to play music or videos, or open a hyperlink, that it transfers to the portable electronic device 100 (which is configured to execute such data/content).

Alternatively, according to some embodiments, the portable electronic device 100 and the providing device 110 may be similar types of devices. For example, they may both be one of a mobile terminal, a portable audio player, a portable video player, a camera, an electronic reading device, or a portable computer.

In some embodiments, the portable electronic device 100 may be configured to selectively activate a portion of the portable electronic device 100 in response to detecting (e.g., via the sensor 711 and/or the camera 713) a particular device gesture among a plurality of device gestures. For example, the portable electronic device 100 may open a web browser or a multimedia application (e.g., music player or video player) in response to detecting a particular device gesture.

According to some embodiments, the portable electronic device 100 may be configured to transmit device gesture data (e.g., gesture data identifying a particular device gesture) to the providing device 110 in response to a sensor (e.g., the sensor 711 and/or the camera 713) detecting the particular device gesture.

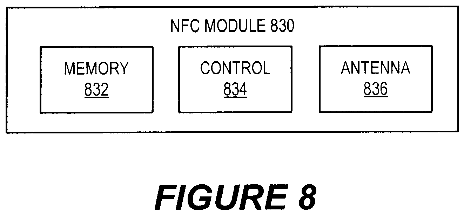

Referring now to Figure 8, a block diagram is provided illustrating an NFC module 830, according to some embodiments of the present inventive concept. For example, the short-range RF wireless communication module 730 illustrated in Figure 7 may include the NFC module 830. Also, the short-range RF wireless communication link 105 illustrated in Figure 1 may be an NFC link. As illustrated in Figure 8, the NFC module 830 may include an antenna 836, a control circuit 834, and a memory 832. The antenna 836 may include a loop antenna that is tuned to transmit/receive electromagnetic signals at a frequency of about 13.56 MHz. The control circuit 834 controls operation of the NFC module 830, and can include a microprocessor or other control circuitry. The memory 832 can store data and/or settings used by the control circuit 834 in performing NFC communications. The control circuit 834 can operate in response to instructions from the controller 716 of the requesting device 100 illustrated in Figure 7. In particular, the controller 716 of the requesting device 100 can execute a communication Application Programming Interface (API) that controls operation of the NFC module 830 illustrated in Figure 8. The communication API permits application programs executing on the requesting device 100 to query and exchange data with other NFC-enabled devices according to one or more of the NFC operational modes, such as read/write mode and peer-to-peer mode.

Referring now to Figures 9A-9C, block diagrams are provided illustrating the providing device 110, according to some embodiments of the present inventive concept. As illustrated in Figure 9A, the providing device 110 may include an identification module 902 and a short-range RF communication module 904. The identification module 902 may be configured to process device gesture data as described with respect to the methods illustrated in Figures 2-6. Additionally, the short-range RF communication module 904 may be configured to communicate with the requesting device 100 through the short-range RF wireless communication link 105, as described with respect to the methods illustrated in Figures 2-6. Although Figures 9A-9C indicate the providing device 110, it will be understood that the modules illustrated therein may be included in the requesting device 100 in some embodiments.

As illustrated in Figure 9B, the short-range RF communication module 904 may include an NFC module 994 in some embodiments. Accordingly, the providing device 110 may be an NFC tag 910, and the short-range RF wireless communication link 105 may be an NFC link. According to some embodiments, the NFC module 994 may be configured to operate in a passive mode. In other words, the NFC module 994 may not have a separate power source, and may therefore operate using power derived from device gesture data signals, identification information signals, and/or other signals transmitted by the requesting device 100.

As illustrated in Figure 9C, the providing device 110 may additionally include a sensor module 906. The sensor module 906 may be configured to identify a plurality of device gestures performed by the requesting device 100. For example, the sensor module may include one or more of the sensors described with respect to the sensor 711 and/or the camera 713 illustrated in Figure 7. Moreover, the identification module 902 may be configured to generate device gesture data in response to the sensor module 906 detecting a particular one of the device gestures.

Alternatively, according to some embodiments, the providing device 110 may not include the sensor module 906, but rather device gestures performed by the requesting device 100 may be detected by the requesting device 100. Accordingly, the identification module 902 may be configured to identify a particular device gesture among a plurality of device gestures in response to receiving device gesture data from the requesting device 100.

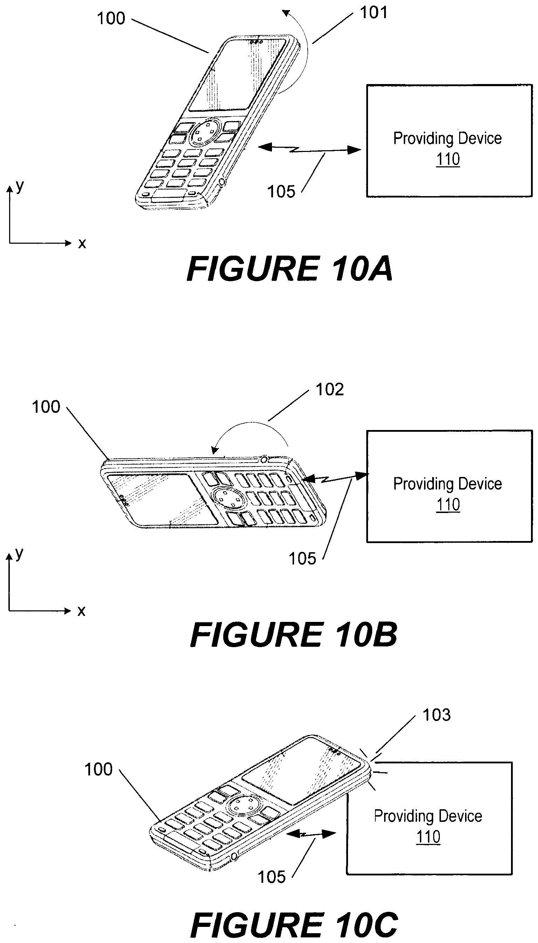

Figures 10A-10C illustrate device gestures performed by the portable electronic device 100, according to some embodiments of the present inventive concept. Although the portable electronic device 100 is illustrated as a requesting device, it will be understood that the device gestures illustrated in Figures 10A-10C may be performed by a providing device in some embodiments. As illustrated in Figure 10A, the portable electronic device (e.g., a requesting device) 100 may perform a device gesture in the form of a rotation 101. The rotation 101 may be clockwise or counterclockwise. In one example, the rotation 101 may be a spin around the y-axis that is illustrated in Figure 10A. In particular, the rotation 101 may include circling (e.g., spinning 360 degrees, or more, around) the y-axis one or more times, or partially circling (e.g., spinning fewer than 360 degrees around) the y-axis.

As illustrated in Figure 10B, the requesting device 100 may perform a device gesture in the form of a tilt 102. The tilt 102 may including rotating around the x-axis. For example, the tilt 102 may include rotating 45 degrees around the x-axis. Also, the tilt 102 may be a flip of the requesting device 100. For example, the requesting device 100 may be flipped from right-side-up to up-side-down (e.g., the tilt 102 may include about 180 degrees of rotation), or vice versa.

In some embodiments, the rotation 101 and/or the tilt 102 of the requesting device 100 may be determined while proximately located to the providing device 110. For example, the rotation 101 and/or the tilt 102 may be determined with respect to a portion (e.g., the display 714) of the requesting device 100 that rotates and/or tilts (e.g., toward or away from the providing device 110). In one example, the requesting device 100 may perform a device gesture in the form of the tilt 102 such that the tilt 102 orients the display 714 of the requesting device 100 in a direction facing the providing device 110.

Moreover, the requesting device 100 may perform a device gesture in the form of a shake (e.g., a user may shake the requesting device 100). For example, the sensor 711 may include one or more gyroscopes and/or accelerometers configured to detect a shake of the requesting device 100. In particular, referring to Figures 7, 10A, and 10B, the sensor 711 may be configured to detect the shake by detecting motion of the requesting device 100 (e.g., by detecting motion along the x-axis, the y-axis, and/or an axis substantially perpendicular to the x-axis or the y-axis).

As illustrated in Figure 10C, the requesting device 100 may perform a device gesture in the form of contact 103 with the requesting device 100. For example, the contact 103 may be performed if the requesting device 100 taps one or more times against the providing device 110. In another example, the contact 103 may be performed if a user of the requesting device taps/knocks a portion (e.g., a housing or the display 714) of the requesting device 100 with a finger or a stylus.

The device gestures of rotation 101, tilt 102, and contact 103 illustrated in Figures 10A-10C may be detected by one or more sensors (e.g., the sensor 711 and/or the camera 713) of the requesting device 100. Additionally, or alternatively, in some embodiments, these and/or other device gestures may be detected by one or more external sensors (e.g., the sensor module 906 of the providing device 110).

As described herein, device gestures performed by the requesting device 100 may trigger transfers from the providing device 110 of various data/content. For example, a providing device 110 associated with an entertainment system (e.g., a video game system, a computer, and/or a Television (TV)) may transfer different data/content to the requesting device 100 in response to different device gestures. In one example, spinning the requesting device 100 may result in a data/content transfer from the providing device 110 that starts a TV application (e.g., live TV) on the requesting device 100. In a further example, tapping/knocking the requesting device 100 once (e.g., with a finger of the user) may result in a data/content transfer from the providing device 110 that starts a movie application on the requesting device 100. In another example, holding the requesting device 100 with the display 714 facing upward (e.g., facing away from the ground) may result in a data/content transfer from the providing device 110 that starts a music application on the requesting device 100. Moreover, tapping/knocking the requesting device 100 on the providing device 110 multiple times may result in a data/content transfer from the providing device 110 that starts a web browser on the requesting device 100. For example, the providing device 110 may transfer data/content (e.g., data 104 or data 106) that includes a hyperlink and/or a command to open the web browser. In a further example, shaking the requesting device 100 may result in a data/content transfer from the providing device 110 that starts another application (e.g., a social networking application or a video game) on the requesting device 100.

In another example, a providing device 110 associated with a news/information advertisement/kiosk may transfer different data/content to the requesting device 100 in response to different device gestures. For example, different categories of news/information may be provided in response to different device gestures. In one example, shaking the requesting device 100 may result in a data/content transfer from the providing device 110 that provides electronic access to a particular newspaper on the requesting device 100. On the other hand, knocking/tapping the requesting device 100 may provide a different newspaper or a magazine. Moreover, flipping the requesting device 100 may provide other multimedia content (e.g., news/information podcasts and/or images).

Other examples of transferring data/content from the providing device 110 may include transferring different data/content (e.g., data 104 or data 106) regarding a specific advertisement, a specific user manual, or a specific book in response to different device gestures. For example, tapping/knocking the providing device 110 with the requesting device 100 may transfer an audio sample of an advertised song to the requesting device 100. In another example, holding the requesting device 100 (e.g., holding substantially still or holding with the display 714 facing in a given direction) may initiate a purchase/download of the full song. On the other hand, shaking the requesting device 100 may indicate a user's opinion of the song on a social networking website. Moreover, flipping the requesting device 100 may send a link to the data/content to a friend of the user. In a further example, tilting the requesting device 100 may open different chapters/sections of a document/multimedia application, whereas tapping/knocking the requesting device 100 multiple times may initiate a multimedia presentation regarding a particular chapter/section of the document/multimedia application.

In some embodiments, the providing device 110 may be personalizable/customizable. For example, a user may have a plurality of providing devices 110 (e.g., a plurality of NFC tags 910) in the user's home. By personalizing/customizing the NFC tags 910, the user may use the same gesture (e.g., a shake of the requesting device 100) at different ones of the NFC tags 910 to transfer different data/content from the NFC tags 910. For example, an NFC tag 910 in the user's kitchen may provide electronic access to a newspaper in response to a shake, a particular radio channel in response to a spin, an e-mail application in response to a knock/tap, and a shopping list and/or refrigerator-contents information in response to a flip. In contrast, a different NFC tag 910 near the user's TV may provide different data/content (e.g., TV shows, movies, video games, etc.) in response to a shake, a spin, a knock/tap, and a flip. Accordingly, different NFC tags 910 in different locations may provide different data/content in response to device gestures. Additionally, in some embodiments, a user of the NFC tags 910 may personalize/customize (e.g., using a website or software application) the particular device gestures (e.g., spin, tilt, etc.) recognized and/or the particular data/content (e.g., TV shows, music, etc.) provided by one or more of the NFC tags 910.

It will be understood that, in some embodiments, the portable electronic device 100 performing the device gesture may be either a providing device or a requesting device. For example, if the portable electronic device 100 is a providing device, then performing a particular device gesture on the portable electronic device 100 may transfer corresponding data from the portable electronic device 100 to a proximately-located electronic device (e.g., transfer data to initiate a movie or a website on a nearby TV). Alternatively, if the portable electronic device 100 is a requesting device, then performing a particular device gesture on the portable electronic device 100 may request a transfer of data to the portable electronic device 100. Moreover, the request may include device gesture data (e.g., data indicating movement or orientation of the portable electronic device 100), or the request could be based on the device gesture data (i.e., the device gesture data may be preprocessed in the portable electronic device 100).

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed various embodiments and, although specific terms are employed, they are used in a generic and descriptive sense only and not for purposes of limitation.

## Claims

1. A data transfer method comprising:
processing device gesture data at a providing device (110) in response to a gesture made by movement or orientation of a requesting device (100) while proximately located to the providing device (110), wherein the device gesture data indicates the movement or orientation of the requesting device (110) and the device gesture data is transmitted through a near field communication, NFC, link from the requesting device (100) to the providing device (110);
identifying at the providing device (110) which of a first and second device gestures has been performed by the requesting device (100) from the device gesture data;
selecting at the providing device (110) one of first and second data in response to identifying a respective one of the first and second device gestures; and
initiating transfer of the selected one of first and second data from the providing device (110) to the requesting device (100), wherein the providing device (110) comprises an NFC tag and transferring of the selected one of first and second data is performed from the NFC tag;
wherein the providing device (110) is a short-range radio frequency, RF, wireless communication device that is not configured to execute the first and second data.

2. The method of claim 1, wherein the requesting device (100) is a mobile telephone or a tablet computer and wherein the providing device (110) and the requesting device (100) are different types of devices.

3. The method of any of claims 1-2, wherein selecting one of the first and second data to transfer from the providing device (110) to the requesting device (100) comprises transferring the first data and preventing transfer of the second data in response to identifying the first device gesture.

4. The method of any of claims 1-3, wherein selecting one of the first and second data to transfer from the providing device (110) to the requesting device (100) comprises transferring the second data and preventing transfer of the first data in response to identifying the second device gesture.

5. The method of any of claims 1-4, wherein the requesting device (100) is configured to identify which of the first and second device gestures has been performed by the requesting device (100).

6. The method of any of claims 1 - 5, further comprising transmitting identification information from the requesting device (100) to the providing device (110).

7. A short-range radio frequency, RF, wireless communication providing device (110) comprising:
an identification module configured to process device gesture data in response to a gesture made by movement or orientation of a requesting device (100) while proximately located to the providing device (110), wherein the device gesture data indicates the movement or orientation of the requesting device (100) and the device gesture data is received through a near field communication, NFC, link from the requesting device (100) at the providing device (110), wherein the identification module is further configured to:
identify which of a first and second device gestures has been performed by the requesting device (100) from the device gesture data; and
select one of first and second data in response to identifying a respective one of the first and second device gestures; and
a short-range RF wireless communication module comprising an NFC tag and configured to initiate a transfer of the selected one of first and second data to the proximately-located requesting device using the NFC tag;
wherein the providing device (110) is not configured to execute the first and second data.

## Patentansprüche

1. Datenübertragungsverfahren, umfassend:
Verarbeiten von Gerätegestendaten an einem bereitstellenden Gerät (110) als Reaktion auf eine Geste, die durch eine Bewegung oder Ausrichtung eines anfragenden Geräts (100) ausgeführt wurde, während es nahe an dem bereitstellenden Gerät (110) positioniert ist, wobei die Gerätegestendaten die Bewegung oder Ausrichtung des anfragenden Geräts (110) angeben und die Gerätegestendaten über eine Nahfeldkommunikations (NFC) - Verbindung von dem anfragenden Gerät (100) an das bereitstellende Gerät (110) übertragen werden; Identifizieren an dem bereitstellenden Gerät (110), welche aus einer ersten und einer zweiten Gerätegeste von dem anfragenden Gerät (100) ausgeführt wurde, ausgehend von den Gerätegestendaten;
Auswählen an dem bereitstellenden Gerät (110) derjenigen aus den ersten und den zweiten Daten als Reaktion auf das Identifizieren einer jeweiligen aus der ersten und der zweiten Gerätegeste; und
Auslösen der Übertragung der Ausgewählten aus den ersten und den zweiten Daten von dem bereitstellenden Gerät (110) an das anfragende Gerät (100), wobei das bereitstellendes Gerät (110) einen NFC-Tag umfasst und das Übertragen der Ausgewählten aus den ersten und den zweiten Daten von dem NFC-Tag aus durchgeführt wird;
wobei das bereitstellende Gerät (110) eine Vorrichtung zur drahtlosen Nahbereichskommunikation über Funkfrequenz, RF, ist, das nicht konfiguriert ist, um die ersten und die zweiten Daten auszuführen.

2. Verfahren nach Anspruch 1, wobei das anfragende Gerät (100) ein Mobiltelefon oder ein Tablet-Computer ist und wobei das bereitstellende Gerät (110) und das anfragende Gerät (100) verschiedene Arten von Geräten sind.

3. Verfahren nach einem der Ansprüche 1-2, wobei das Auswählen derjenigen aus den ersten und den zweiten Daten zum Übertragen von dem bereitstellenden Gerät (110) an das anfragende Gerät (100) das Übertragen der ersten Daten und das Verhindern der Übertragung der zweiten Daten als Reaktion auf das Identifizieren der ersten Gerätegeste umfasst.

4. Verfahren nach einem der Ansprüche 1-3, wobei das Auswählen derjenigen aus den ersten und den zweiten Daten zum Übertragen von dem bereitstellenden Gerät (110) an das anfragende Gerät (100) das Übertragen der zweiten Daten und das Verhindern der Übertragung der ersten Daten als Reaktion auf das Identifizieren der zweiten Gerätegeste umfasst.

5. Verfahren nach einem der Ansprüche 1-4, wobei das anfragende Gerät (100) konfiguriert ist, um zu identifizieren, welche aus der ersten und der zweiten Gerätegeste von dem anfragenden Gerät (100) ausgeführt wurde.

6. Verfahren nach einem der Ansprüche 1-5, ferner umfassend das Übertragen einer Identifikationsinformation von dem anfragenden Gerät (100) an das bereitstellende Gerät (110).

7. Bereitstellendes Gerät (110) zur drahtlosen Nahbereichskommunikation über Funkfrequenz, RF, umfassend:
ein Identifikationsmodul, das konfiguriert ist, um Gerätegestendaten als Reaktion auf eine Geste, die durch eine Bewegung oder Ausrichtung eines anfragenden Geräts (100) ausgeführt wurde, während es nahe an dem bereitstellenden Gerät (110) positioniert ist, zu verarbeiten, wobei die Gerätegestendaten die Bewegung oder Ausrichtung des anfragenden Geräts (100) angeben und die Gerätegestendaten über eine Nahfeldkommunikations(NFC)-Verbindung von dem anfragenden Gerät (100) an dem bereitstellenden Gerät (110) empfangen werden, wobei das Identifikationsmodul ferner konfiguriert ist, um:
zu identifizieren, welche aus einer ersten und einer zweiten Gerätegeste von dem anfragenden Gerät (100) ausgeführt wurde, ausgehend von den Gerätegestendaten;
und diejenigen aus ersten und zweiten Daten als Reaktion auf das Identifizieren einer jeweiligen aus der ersten und der zweiten Gerätegeste auszuwählen; und
ein Nahbereichs-RF-Drahtloskommunikationsmodul, das einen NFC-Tag umfasst und konfiguriert ist, um eine Übertragung der Ausgewählten aus den ersten und den zweiten Daten an das in der Nähe positionierte anfragende Gerät unter Verwendung des NFC-Tags auszulösen;
wobei das bereitstellende Gerät (110) nicht konfiguriert ist, um die ersten und die zweiten Daten auszuführen.

## Revendications

1. Procédé de transfert de données comprenant :
le traitement de données de geste de dispositif au niveau d'un dispositif fournisseur (110) en réponse à un geste fait par un mouvement ou une orientation d'un dispositif demandeur (100) pendant qu'il est situé à proximité du dispositif fournisseur (110), dans lequel les données de geste de dispositif indiquent le mouvement ou l'orientation du dispositif demandeur (110) et les données de geste de dispositif sont transmises via une liaison de communication en champ proche, NFC, du dispositif demandeur (100) au dispositif fournisseur (110) ;
le fait d'identifier au niveau du dispositif fournisseur (110) quel geste parmi des premier et second gestes de dispositif a été réalisé par le dispositif demandeur (100), à partir des données de geste de dispositif ;
la sélection au niveau du dispositif fournisseur (110) de données parmi des premières et secondes données en réponse à l'identification d'un geste respectif parmi les premier et second gestes de dispositif ; et
le lancement d'un transfert des données sélectionnées parmi les premières et secondes données du dispositif fournisseur (110) au dispositif demandeur (100), dans lequel le dispositif fournisseur (110) comprend une étiquette NFC et le transfert des données sélectionnées parmi les premières et secondes données est réalisé à partir de l'étiquette NFC ;
dans lequel le dispositif fournisseur (110) est un dispositif de communication sans fil radiofréquence, RF, à courte distance qui n'est pas configuré pour exécuter les premières et secondes données.

2. Procédé selon la revendication 1, dans lequel le dispositif demandeur (100) est un téléphone mobile ou une tablette électronique et dans lequel le dispositif fournisseur (110) et le dispositif demandeur (100) sont différents types de dispositifs.

3. Procédé selon l'une quelconque des revendications 1 à 2, dans lequel la sélection des données parmi les premières et secondes données pour les transférer du dispositif fournisseur (110) au dispositif demandeur (100) comprend le transfert des premières données et l'empêchement du transfert des secondes données en réponse à l'identification du premier geste de dispositif.

4. Procédé selon l'une quelconque des revendications 1 à 3, dans lequel la sélection des données parmi les premières et secondes données pour les transférer du dispositif fournisseur (110) au dispositif demandeur (100) comprend le transfert des secondes données et l'empêchement du transfert des premières données en réponse à l'identification du second geste de dispositif.

5. Procédé selon l'une quelconque des revendications 1 à 4, dans lequel le dispositif demandeur (100) est configuré pour identifier quel geste parmi les premier et second gestes de dispositif a été réalisé par le dispositif demandeur (100).

6. Procédé selon l'une quelconque des revendications 1 à 5, comprenant en outre la transmission d'informations d'identification du dispositif demandeur (100) au dispositif fournisseur (110).

7. Dispositif fournisseur de communication sans fil radiofréquence, RF, à courte distance (110), comprenant :
un module d'identification configuré pour traiter des données de geste de dispositif en réponse à un geste fait par un mouvement ou une orientation d'un dispositif demandeur (100) pendant qu'il est situé à proximité du dispositif fournisseur (110), dans lequel les données de geste de dispositif indiquent le mouvement ou l'orientation du dispositif demandeur (100) et les données de geste de dispositif sont reçues via une liaison de communication en champ proche, NFC, depuis le dispositif demandeur (100) au niveau du dispositif fournisseur (110), dans lequel le module d'identification est en outre configuré pour :
identifier quel geste parmi des premier et second gestes de dispositif a été réalisé par le dispositif demandeur (100) à partir des données de geste de dispositif ; et
sélectionner des données parmi des premières et secondes données en réponse à l'identification d'un geste respectif parmi les premier et second gestes de dispositif ; et
un module de communication sans fil RF à courte distance comprenant une étiquette NFC et configuré pour lancer un transfert des données sélectionnées parmi les premières et secondes données vers le dispositif demandeur situé à proximité à l'aide de l'étiquette NFC ;
dans lequel le dispositif fournisseur (110) n'est pas configuré pour exécuter les premières et secondes données.
